# EUROPEAN PATENT APPLICATION

(11) **EP 4 790 397 A1**
(43) Date of publication of application: **12.08.2026**
(21) Application number: 24874589.5
(22) Date of filing: 01.10.2024
(51) Int. Cl.: G01N 23/10, G01N 21/17, G01N 23/04, G01N 23/18

(54) **INSPECTION DEVICE**

(30) Priority: 04.10.2023 JP 2023173263
(71) Applicant: System Square Inc., Nagaoka-shi, Niigata 940-2121 (JP)
(72) Inventor: ANDO, Wataru, Nagaoka-shi, Niigata 940-2121 (JP); YANAGISAWA, Yu, Nagaoka-shi, Niigata 940-2121 (JP); SUZUKI, Atsushi, Nagaoka-shi, Niigata 940-2121 (JP)
(74) Representative: Müller-Boré & Partner Patentanwälte PartG mbB
(86) International application number: PCT/JP2024/035057
(87) International publication number: WO 2025/074987

(57) **Abstract**

An inspection apparatus that contributes to improving workability in the adjustment of the position and orientation of the reflection surface that changes the direction of the optical path extending from the illumination unit toward the image capturing unit is provided.
a conveying unit that conveys, in a predetermined direction, an inspection target that is a package; an X-ray irradiation unit that emits X-rays to an inspection target; an X-ray detection unit configured to detect X-rays having passed through the inspection target and output X-ray detection data; an illumination unit that emits light onto the inspection target; an image capturing unit that captures an optical image of the inspection target from a side opposite to a light source across the inspection target and outputs optical image data; a reflection member that is provided in the middle of an optical path extending from the illumination unit toward the image capturing unit and includes a reflection surface that changes a direction of the optical path; a reflection direction adjustment unit to which the reflection member is attached and that adjusts a position and/or an orientation of the reflection surface; an image generation unit that generates an X-ray transmission image based on the X-ray detection data and generates an optical image based on the optical image data; and an inspection unit that determines a position of contents within the inspection target based on the X-ray transmission image and the optical image.

## Description

### TECHNICAL FIELD

The present invention relates to an inspection apparatus that performs inspections such as inspection of seal biting in a seal portion, based on an X-ray transmission image and an optical image of an inspection target that is a package.

### BACKGROUND ART

When an inspection target that is a package is irradiated with electromagnetic waves such as X-rays, which have high transmittance through objects, and the transmitted electromagnetic waves are detected, a distribution of intensity of the transmitted amount corresponding to the internal state of the package can be obtained. By generating a two-dimensional image (an electromagnetic wave transmission image) in which this distribution of intensity is represented by pixel tones (such as brightness, shading, and intensity of color), it is possible to visualize the internal state of the package that cannot be known from its external appearance.

However, in inspections using X-rays or the like, due to the nature of visualizing the interior by seeing through the package, the package itself is difficult to distinguish in the image. Therefore, for example, it is difficult to identify where contents or fragments thereof are located within the package, and furthermore, to determine whether such a position corresponds to a seal portion of the package and whether seal biting has occurred.

Accordingly, by irradiating the package with light having low transmittance through objects, such as visible light or near-infrared light, from one side and capturing an image from the other side, an optical image is obtained in which the position and contour shape of the package are represented in such a manner that the package portion appears darker than its surroundings. By comparing this optical image with an electromagnetic wave transmission image, the positions of contents and the like within the package are determined, and an inspection apparatus that inspects whether the determined positions correspond to the seal portion, that is, whether seal biting has occurred, is disclosed, for example, in Patent Document 1.

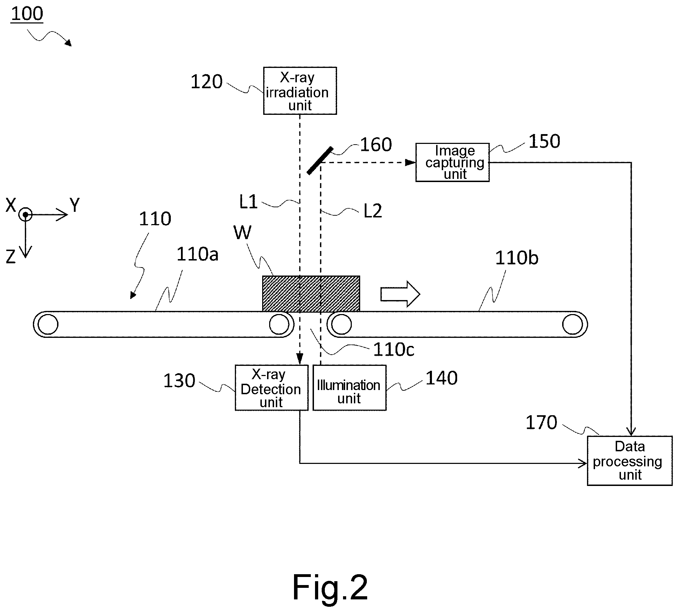

Fig. 2 is an excerpt of portions related to the invention of the present application from an inspection apparatus 100 disclosed in Patent Document 1.

The inspection apparatus 100 includes at least a conveying unit 110, an X-ray irradiation unit 120, an X-ray detection unit 130, an illumination unit 140, an image capturing unit 150, a reflection member 160, and a data processing unit 170. Among these components, at least the X-ray irradiation unit 120, the X-ray detection unit 130, the illumination unit 140, the image capturing unit 150, and the reflection member 160 are housed in a housing (not shown). An inspection target W is an arbitrary packaged article, and is placed on the conveying unit 110 that passes through the housing, conveyed into the housing from an inlet provided in the housing, and, after undergoing inspection, conveyed out of the housing from an outlet provided in the housing.

The conveying unit 110 is a belt conveyor, has a width in an X-axis direction in a three-dimensional orthogonal coordinate system of X-, Y-, and Z-axes shown in Fig. 2, and moves the belt in the Y-axis direction to thereby move the inspection target W placed on the belt in the Y-axis direction.

The conveying unit 110 is divided into an upstream conveying unit 110a and a downstream conveying unit 110b, the upstream conveying unit 110a and the downstream conveying unit 110b having the same conveying speed, and a gap portion 110c is provided between the upstream conveying unit 110a and the downstream conveying unit 110b, the gap portion 110c being sized such that conveyance is transferred without causing the inspection target W to fall.

The X-ray irradiation unit 120 emits X-rays toward the inspection target W being conveyed by the conveying unit 110.

The X-ray detection unit 130 periodically detects transmitted X-rays, which are X-rays that have passed through the inspection target W among the X-rays incident on the inspection target W from the X-ray irradiation unit 120, and outputs X-ray detection data. The X-ray detection unit 130 is an X-ray line sensor having a plurality of X-ray detection elements arranged linearly in the X-axis direction, and periodically detects transmitted X-rays while the inspection target W is being moved. By collecting, over the entire width of the inspection target W, linear X-ray detection data that are sequentially obtained, X-ray detection data for the entire inspection target W are obtained.

The X-ray irradiation unit 120 and the X-ray detection unit 130 are disposed so as to face each other across the gap portion 110c, on one side and the other side, respectively, in the Z-axis direction.

The illumination unit 140 emits light toward the inspection target W being conveyed by the conveying unit 110.

The image capturing unit 150 periodically captures an optical image of the inspection target W from a side opposite to a light source across the inspection target, and outputs optical image data. The image capturing unit 150 includes an optical line sensor having a plurality of photodetection elements arranged linearly in the X-axis direction, and periodically captures optical images while the inspection target W being moved. By collecting, over the entire width of the inspection target W, linear optical image data that are sequentially obtained, optical image data for the entire inspection target W are obtained.

The illumination unit 140 and the image capturing unit 150 are arranged on one side and the other side, respectively, in the Z-axis direction across the gap portion 110c.

The X-ray irradiation unit 120, the X-ray detection unit 130, the illumination unit 140, and the image capturing unit 150 are arranged such that an optical path L1 extending from the X-ray irradiation unit 120 toward the X-ray detection unit 130 and an optical path L2 extending from the illumination unit 140 toward the image capturing unit 150 pass through the gap portion 110c in parallel in the Z-axis direction, as shown in Fig. 2. Further, with the conveying unit 110 interposed therebetween, the X-ray irradiation unit 120 and the image capturing unit 150 are arranged on one side in the Z-axis direction, and the X-ray detection unit 130 and the illumination unit 140 are arranged on the other side.

In addition, on the side on which the X-ray irradiation unit 120 is provided, a reflection member 160 having a reflection surface inclined at 45 degrees with respect to the XZ plane is provided in the optical path L2 to change the direction of the optical path L2 from the Z-axis direction to the Y-axis direction, and the image capturing unit 150 is arranged at an extended end of the optical path L2 whose direction has been changed. That is, the light emitted from the illumination unit 140 is emitted toward the inspection target W passing over the gap portion 110c, and is further reflected in a different direction by the reflection surface of the reflection member 160 so as to reach the image capturing unit 150.

The data processing unit 170 generates an X-ray transmission image of the inspection target W based on X-ray detection data collected by the X-ray detection unit 130, and also generates an optical image of the inspection target W based on optical image data collected by the image capturing unit 150. Then, based on the contour of the inspection target W, which is a package, as grasped from the optical image, the positions of contents and the like within the inspection target W are determined, and it is inspected whether the determined positions correspond to a seal portion, that is, whether seal biting has occurred.

### PRIOR ART REFERENCES

### PATENT DOCUMENTS

Patent Document 1: JP 5884145 B

### SUMMARY OF THE INVENTION

### PROBLEMS TO BE SOLVED BY THE INVENTION

In the case of the inspection apparatus 100 shown in Fig. 2, the position and orientation of the reflection surface of the reflection member 160 are adjusted before shipment so that the optical image is appropriately captured by the image capturing unit 150. However, due to circumstances after shipment, such as vibrations during transportation, vibrations at an installation site, or loosening of the fixation of the reflection member 160, a misalignment may occur in the position or orientation, and an appropriate image may not be obtained. As a countermeasure in the case where the misalignment occurs, for example, a method of compensating for the misalignment by image processing in software can be mentioned. However, if the misalignment is significant, image processing cannot sufficiently compensate for it, and therefore it is necessary to adjust the position and orientation of the reflection surface. However, since the reflection member is generally fixed by screws or the like, in order to perform adjustment, it is necessary to remove the screws or the like to release the fixation, adjust the position and orientation, and then fix it again with screws or the like. Therefore, skill and time are required, resulting in a problem in workability.

An object of the present invention is to provide an inspection apparatus that contributes to improving workability in adjustment of the position and orientation of the reflection surface that changes the direction of the optical path extending from the illumination unit toward the image capturing unit.

### MEANS FOR SOLVING THE PROBLEMS

An inspection apparatus according to the present invention comprises: a conveying unit that conveys, in a predetermined direction, an inspection target that is a package; an X-ray irradiation unit that irradiates an inspection target with X-rays; an X-ray detection unit configured to detect X-rays having passed through the inspection target and output X-ray detection data; an illumination unit that emits light onto the inspection target; an image capturing unit that captures an optical image of the inspection target from a side opposite to a light source across the inspection target and outputs optical image data; a reflection member that is provided in the middle of an optical path extending from the illumination unit toward the image capturing unit and includes a reflection surface that changes a direction of the optical path; a reflection direction adjustment unit to which the reflection member is attached and that adjusts a position and/or an orientation of the reflection surface; an image generation unit that generates an X-ray transmission image of the inspection target based on the X-ray detection data and generates an optical image of the inspection target based on the optical image data; and an inspection unit that determines a position of contents within the inspection target based on the X-ray transmission image and the optical image.

With the conveying unit interposed therebetween, the X-ray irradiation unit, the image capturing unit, and the reflection member may be arranged on the same one side, and the X-ray detection unit and the illumination unit may be arranged on the same other side.

An image adjustment unit that corrects the optical image and/or the X-ray transmission image by image processing may be further provided.

### EFFECTS OF INVENTION

According to the present invention, since the position and inclination of the reflection surface can be easily changed without attaching or detaching the reflection member, workability of adjustment can be improved.

### BRIEF DESCRIPTION OF THE DRAWINGS

Fig. 1 is a diagram showing a configuration example of an inspection apparatus 200 of the present invention.
Fig. 2 is a diagram showing a configuration example of a conventional inspection apparatus 100.

### DESCRIPTION OF EMBODIMENTS

Hereinafter, embodiments of the present invention will be described with reference to the drawings. In the following description and drawings, the same reference numeral is attached to the same functional parts, and descriptions of the functional parts once explained are either omitted or explained to the extent necessary.

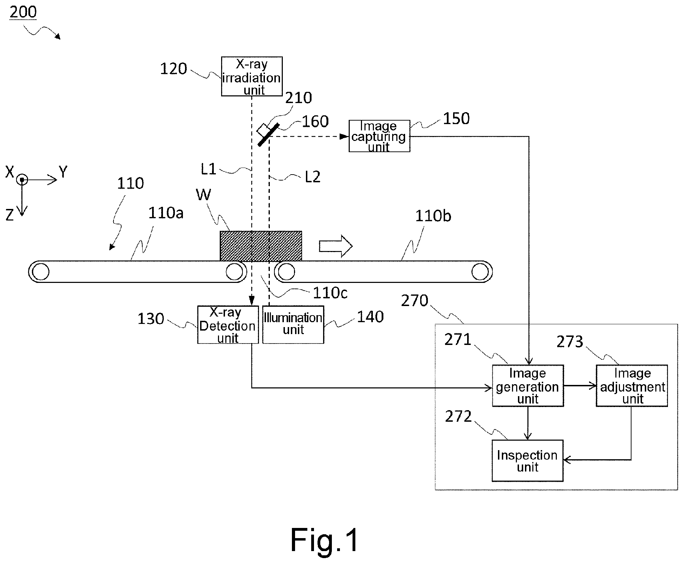

Fig. 1 is a diagram showing a configuration example of an inspection apparatus 200 of the present invention. The inspection apparatus 200 includes a conveying unit 110, an X-ray irradiation unit 120, an X-ray detection unit 130, an illumination unit 140, an image capturing unit 150, a reflection member 160, a reflection direction adjustment unit 210, and a data processing unit 270.

Among these components, at least the X-ray irradiation unit 120, the X-ray detection unit 130, the illumination unit 140, the image capturing unit 150, the reflection member 160, and the reflection direction adjustment unit 210 are housed in a housing (not shown). An inspection target W is placed on the conveying unit 110 that passes through the housing, conveyed into the housing from an inlet provided in the housing, and, after undergoing inspection, conveyed out of the housing from an outlet provided in the housing. The inspection target W is an arbitrary packaged article, and examples of contents include foods and various products, and it is also assumed that foreign matter may be mixed therein.

The conveying unit 110 is a conveyor capable of continuously conveying the inspection target W placed thereon in a predetermined direction, and may be any of various types of conveyors. The conveying unit 110 has a width in an X-axis direction in a three-dimensional orthogonal coordinate system of X-, Y-, and Z-axes shown in Fig. 1, and moves a placement surface lying in an XY plane in a positive Y-axis direction, thereby moving the inspection target W placed thereon in the positive Y-axis direction. The placement surface of the conveying unit 110 may be a physical surface that moves together with the inspection target W placed thereon along the plane, such as a belt conveyor, or may be a virtual surface in the sense that the inspection target W is moved along the plane by applying driving force to the inspection target W, such as a driven roller conveyor. The conveying speed depends on factors such as a detection cycle of the detection elements; however, in inspection of packaged articles, for example, the typical speed ranges from several meters per minute to several hundred meters per minute.

The conveying unit 110 is divided into an upstream conveying unit 110a and a downstream conveying unit 110b, the upstream conveying unit 110a and the downstream conveying unit 110b having the same conveying speed, and a gap portion 110c is provided between the upstream conveying unit 110a and the downstream conveying unit 110b, the gap portion 110c being sized such that conveyance is transferred without causing the inspection target W to fall.

The X-ray irradiation unit 120 emits X-rays toward the inspection target W being conveyed by the conveying unit 110.

The X-ray detection unit 130 periodically detects transmitted X-rays, which are X-rays that have passed through the inspection target W among the X-rays incident on the inspection target W from the X-ray irradiation unit 120, and outputs X-ray detection data. The X-ray detection unit 130 includes an X-ray line sensor having a plurality of X-ray detection elements arranged linearly in the X-axis direction. The X-ray line sensor may be a single-row type, or may be a type in which a plurality of rows are arranged in the Y-axis direction.

The X-ray irradiation unit 120 and the X-ray detection unit 130 are disposed so as to face each other across the gap portion 110c, on one side and the other side, respectively, in the Z-axis direction. Accordingly, by periodically detecting transmitted X-rays while conveying the inspection target W in the positive Y-axis direction until the entire width thereof passes over the gap portion 110c, a plurality of pieces of X-ray detection data obtained by linearly slicing the inspection target W in the X-axis direction are acquired, and by arranging these pieces of data in time series, X-ray detection data for the entire inspection target W can be obtained.

Note that the radiation used for irradiation and detection need not necessarily be X-rays, and any electromagnetic waves with relatively high transmittance through the packaging and relatively low transmittance through the contents or foreign objects are applicable for the inspection target. In this case, the irradiation unit and the detection unit may be configured in accordance with the selected electromagnetic waves.

The illumination unit 140 emits light toward the inspection target W being conveyed by the conveying unit 110. The illumination unit 140 is, for example, a line illumination in which a plurality of light-emitting elements are linearly arranged in the X-axis direction. The line illumination may be a single-row type, or may be a type in which a plurality of rows are arranged in the Y-axis direction. As examples of the light-emitting elements, light-emitting diodes that emit visible light or near-infrared light may be used.

The image capturing unit 150 periodically captures an optical image of the inspection target W from a side opposite to a light source across the inspection target, and outputs optical image data. The image capturing unit 150 is an optical line sensor in which a plurality of photodetection elements are linearly arranged in the X-axis direction. The optical line sensor may be a single-row type, or may be a type in which a plurality of rows are arranged in the Y-axis direction.

The illumination unit 140 and the image capturing unit 150 are arranged on one side and the other side, respectively, in the Z-axis direction across the gap portion 110c. Accordingly, by periodically capturing the received light while conveying the inspection target W in the positive Y-axis direction until the entire width thereof passes over the gap portion 110c, a plurality of pieces of optical image data obtained by linearly slicing the inspection target W in the X-axis direction are acquired, and by arranging these pieces of data in time series, optical image data for the entire inspection target W can be obtained.

The X-ray irradiation unit 120, the X-ray detection unit 130, the illumination unit 140, and the image capturing unit 150 are arranged such that an optical path L1 extending from the X-ray irradiation unit 120 toward the X-ray detection unit 130 and an optical path L2 extending from the illumination unit 140 toward the image capturing unit 150 pass through the gap portion 110c in parallel in the Z-axis direction, as shown in Fig. 1. Accordingly, when the inspection target W passes through the gap portion 110c, it becomes possible to acquire the X-ray detection data and the optical image data under the same conditions.

In order to acquire X-ray detection data and optical image data of the inspection target W passing through the gap portion 110c under the same conditions, it is desirable that the optical path L1 and the optical path L2 be brought as close to each other as possible at the gap portion 110c. However, if the X-ray irradiation unit 120 and the illumination unit 140 are arranged on one side in the Z-axis direction across the gap portion 110c, and the X-ray detection unit 130 and the image capturing unit 150 are arranged on the other side, the X-rays emitted from the X-ray irradiation unit 120 may enter the image capturing unit 150, or the light emitted from the illumination unit 140 may enter the X-ray detection unit 130, thereby possibly causing interference with the inspection. Therefore, as shown in Fig. 1, the X-ray irradiation unit 120 and the image capturing unit 150 may be arranged on one side in the Z-axis direction, and the X-ray detection unit 130 and the illumination unit 140 may be arranged on the other side.

Further, since the X-ray irradiation unit 120 is generally large in size, it is not easy to arrange other functional units in close proximity within a limited housing space. Therefore, on the side on which the X-ray irradiation unit 120 is provided, the direction of the optical path L2 extending from the illumination unit 140 toward the image capturing unit 150 may be changed to avoid a close arrangement. For example, as shown in Fig. 1, on the side on which the X-ray irradiation unit 120 is provided, a reflection member 160 having a reflection surface inclined at 45 degrees with respect to the XZ plane may be provided in the optical path L2 to change the direction of the optical path L2 from the Z-axis direction to the Y-axis direction, and the image capturing unit 150 may be arranged at an extended end of the optical path L2 whose direction has been changed. That is, the light emitted from the illumination unit 140 is emitted toward the inspection target W passing over the gap portion 110c, and is further reflected in a different direction by the reflection surface of the reflection member 160 so as to reach the image capturing unit 150.

The reflection direction adjustment unit 210 is a unit to which the reflection member 160 is attached, and that adjusts a reflection direction of light incident from the illumination unit 140 by changing the position and/or orientation of the reflection surface, either manually or automatically based on instruction input from an arbitrary input unit (not shown) to an actuator (not shown).

As the reflection direction adjustment unit 210, for example, a known positioning stage may be employed in accordance with a mode in which the position or orientation of the reflection surface is to be changed. In this case, the reflection member 160 is attached to the positioning stage, alignment of the reflection surface is performed before shipment, and after shipment, when a misalignment in the position or orientation of the reflection surface occurs, adjustment is performed by operating the positioning stage manually or automatically. When it is desired to make the position of the reflection surface changeable, for example, a linear sliding type positioning stage that is slidable in positive and negative directions along each axis of a three-dimensional orthogonal coordinate system may be employed. When it is desired to make the orientation of the reflection surface changeable, for example, a tilt-type positioning stage that is rotatable about each axis of a three-dimensional orthogonal coordinate system, or a gimbal-type positioning stage that is tiltable in all directions over 360 degrees, may be employed. Further, different types of positioning stages may be employed in combination. For example, when it is desired to make both the position and the orientation of the reflection surface changeable, a gimbal-type positioning stage may be attached to a linear sliding-type positioning stage, and the reflection member 160 may be attached to the gimbal-type positioning stage.

The data processing unit 270 includes an image generation unit 271 and an inspection unit 272.

The image generation unit 271 generates an X-ray transmission image of the inspection target W based on X-ray detection data collected by the X-ray detection unit 130, and also generates an optical image of the inspection target W based on optical image data collected by the image capturing unit 150.

The inspection unit 272 inspects, based on the X-ray transmission image and the optical image generated by the image generation unit 271, seal biting of contents in a seal of the inspection target W, and the like. In the X-ray transmission image, the presence of contents of the inspection target W and fragments thereof is represented, and in the optical image, the contour of the inspection target W, which is a package, is represented. Both images are generated based on data collected under the same conditions. Accordingly, by aligning and superimposing the two images, the positions of contents and the like within the inspection target W can be determined, and it can be determined whether the determined positions correspond to the seal portion, that is, whether seal biting has occurred.

With the inspection apparatus 200 configured as described above, since the position and orientation of the reflection surface can be easily changed without attaching or detaching the reflection member, it is possible to improve the workability of adjustment.

The data processing unit 270 may further include an image adjustment unit 273 that corrects, by image processing, image deviation caused by misalignment in the position or orientation of the reflection surface, based on the optical image generated by the image generation unit 271, so as to enable more detailed adjustment. In addition, since cases are also assumed in which alignment or superimposition with the X-ray transmission image cannot be satisfactorily performed by correction of only the optical image, or in which alignment or superimposition of the two images is easier when the X-ray transmission image is corrected rather than the optical image, the image adjustment unit 273 may be configured to include a function of correcting, by image processing, the X-ray transmission image generated by the image generation unit 271.

As processing performed by the image adjustment unit 273, for example, linear transformation of position or size may be performed, or shear transformation may be performed. The image processing may be performed automatically based on predetermined rules, or may be performed based on various parameters input by an operator.

The functions of the data processing unit 270 may be realized by being described in a program and executed by the CPU of a computer.

The present invention is not limited to the above embodiments. The above embodiments are examples, and any embodiment that has substantially the same configuration as the technical concept described in the claims of the present invention and achieves similar effects is included in the technical scope of the present invention. In other words, changes can be made as appropriate within the scope of the technical concept expressed in the present invention, and forms with such changes and improvements are included in the technical scope of the present invention.

### Reference Signs List

100, 200 ... Inspection apparatus
110 ... Conveying unit
110a ... Upstream conveying unit
110b ... Downstream conveying unit
110c ... Gap portion
120 ... X-ray irradiation unit
130 ... X-ray detection unit
140 ... Illumination unit
150 ... Image capturing unit
160 ... Reflection member
170, 270 ... Data processing unit
210 ... Reflection direction adjustment unit
271 ... Image generation unit
272 ... Inspection unit
273 ... Image adjustment unit
L1, L2 ... Optical path
W ... Inspection target

## Claims

1. An inspection apparatus comprising:
a conveying unit that conveys, in a predetermined direction, an inspection target that is a package;
an X-ray irradiation unit that irradiates the inspection target with X-rays;
an X-ray detection unit configured to detect X-rays having passed through the inspection target and output X-ray detection data;
an illumination unit that irradiates the inspection target with light;
an image capturing unit that captures an optical image of the inspection target from a side opposite to a light source across the inspection target and outputs optical image data;
a reflection member that is provided in the middle of an optical path extending from the illumination unit toward the image capturing unit and includes a reflection surface that changes the direction of the optical path;
a reflection direction adjustment unit to which the reflection member is attached and that adjusts a position and/or an orientation of the reflection surface;
an image generation unit that generates an X-ray transmission image of the inspection target based on the X-ray detection data and generates an optical image of the inspection target based on the optical image data; and
an inspection unit that determines a position of contents within the inspection target based on the X-ray transmission image and the optical image.

2. The inspection apparatus according to claim 1, wherein, with the conveying unit interposed therebetween, the X-ray irradiation unit, the image capturing unit, and the reflection member are located on the same one side, and the X-ray detection unit and the illumination unit are located on the same other side.

3. The inspection apparatus according to claim 1 or 2, further comprising an image adjustment unit that corrects the optical image and/or the X-ray transmission image by image processing.
